# EUROPEAN PATENT SPECIFICATION

(11) **EP 1 220 111 B1**
(45) Date of publication and mention of the grant of the patent: **11.07.2007**
(21) Application number: 01128767.9
(22) Date of filing: 03.12.2001
(51) Int. Cl.: G06F 17/30

(54) **Web access using database server for information collection**
Webzugriff unter Verwendung eines Datenbankservers zur Informationssammlung
Accès au Web utilisant un serveur de base de données pour la collection d'information

(30) Priority: 04.12.2000 JP 2000368876
(43) Date of publication of application: 03.07.2002
(73) Proprietor: SHARP KABUSHIKI KAISHA, Osaka 545-8522 (JP)
(72) Inventor: Okamura, Hirofumi, Tenri-shi, Nara 632-0004 (JP); Nakagawa, Katsuya, Soraku-gun, Kyoto 619-0223 (JP)
(74) Representative: Müller - Hoffmann & Partner

(56) References cited:
- EP-A- 0 981 232
- WO-A-00/14640
- WO-A-99/48026
- US-A- 6 085 193
- PATENT ABSTRACTS OF JAPAN vol. 1999, no. 02, 26 February 1999 (1999-02-26) & JP 10 301957 A (CASIO COMPUT CO LTD), 13 November 1998 (1998-11-13)

## Description

### FIELD OF THE INVENTION

The present invention relates to a database server, an information management program, an information management method and a recording medium which records the information management program, which are accessible to/from a clientele via a network and store client data.

### BACKGROUND OF THE INVENTION

In order to collect various information from a network such as Internet, a user conventionally utilizes (a) various information terminals (hereinafter, simply referred to as a "client") such as a personal computer, which can be connected to the network, a portable information terminal having a communication function, a portable telephone, and (b) a software that is installed in the information terminal, such as browser. In this manner, the user collects necessary information from various information supplying server computers.

On the other hand, because the network has become more hierarchical and versatile, operation of the information terminal and the software have become more so complicated that a beginner, who is not so familiar with the operation, has a difficulty to collect the information.

Therefore, many kinds of information collection software having with a so-called agent function have been developed so that the beginner can collect the information on the network without difficulty. The information collection software having the agent function is a software having such a function that the information on the network is automatically collected with the software by inputting a simple command, instead of manual operation by the user.

However, in order to use the information collection software having the agent function, the user should activate the information collection software having the agent function and input conditional information for specifying information he requires, each time he collects the information. This poses such a problem that use of the information collection software having the agent function does not reduce a load of the user, and cannot realize a flexible and speedy information collection.

Thus, Japanese Unexamined Patent Application, Tokukaihei, NO. 10-301957, (published on November 13, 1998; and entitled "INFORMATION REPORTING APPARATUS AND RECORDING MEDIUM") discloses an information reporting apparatus for automatically collecting necessary information. The information reporting apparatus periodically executes information collection software having the agent function at the client side, so that the necessary information is collected by automatically accessing a server computer (hereinafter, simply referred to as a "server") on a network, without an instruction from a user.

However, the information collection software having the agent function of the information reporting apparatus is installed on the client side. Therefore, the automatic accessing of the client to the server causes a traffic jam in the network between the client and the server, thereby causing such a problem that a communication load of the client is increased.

The present information, which has been contrived in order to solve the foregoing problems of the prior art, has an object to provide a database server, an information management program, an information management method and a recording medium having the information management program recorded therein, which allow the client to collect information data to be required in the future in advance, thereby enabling the client to access information at high speed while alleviating a load of the user for operation and a load of the client for communication.

In this context, documents EP-A-0944002 and WO-A-0014640 have to be mentioned which disclose data base servers having an information collection condition set means for performing a search based on client data of clients connected to the data base server.

### SUMMARY OF THE INVENTION

A database server according to the present invention, which is accessible to/from a client via a network, includes: reception and transmission means for sending/receiving data to/from the client; data storage means having a client data storage region which stores client data corresponding to the client; client data management means for managing the client data; information collection condition set means for setting, when the client data is modified, a condition for information collection (hereinafter referred to as an "information collection condition") for specifying such information data as to be required by the client in future based on the modification; and information data creation means for creating the information data by a search performed according to the information collection condition.

In particular, the present invention provides a data base server which includes reception and transmission means for sending/receiving data to/from a client via a network, and data storage means having a client data storage region which stores client data corresponding to the client, the data base server comprising:
information collection condition set means for detecting a data modification effected by the client in the client data storage region and setting an information collection condition based on the data modified by the detected data modification for performing a search therewith for information data to be required by the client in future, wherein the information collection condition set means sets the information collection condition by using additional client information, which includes information on use status of the information data created by information data creation means in the past, and wherein the information collection condition is a keyword group, and
the information data creation means creating the information data by a search performed according to the information collection condition.

With this arrangement, the database server is accessed to the client via the network and sends/receives various data through the reception and transmission means. The database server has client data corresponding to the client in the data storage means.

The client data management means manages a storage condition of the client data and performs updating, addition, deletion or the like with respect to the client data. In addition, the client data management means notifies the information collection condition set means of a modification made in the client data. The information collection condition set means then sets the information collection condition based on the modification.

Note that, in the case where the information collection condition set means itself detects a data modification in the client data storage region, the client data management means can be omitted. In other words, the client data management means and the information collection condition set means may be formed integrally.

In that case, according to the present invention, a database server, which is accessible to/from a client via a network, includes: reception and transmission means for sending/receiving data to/from the client; data storage means having a client data storage region which stores client data corresponding to the client; information collection condition set means for detecting a data modification in the client data storage region and setting an information collection condition for specifying such information data as to be required by the client in future based on results of the detection; and information data creation means for creating the information data by a search performed according to the information collection condition.

The information data creation means receives various data from a computer and/or a database server connected with the network as a result of the search performed according to the information collection condition, thereby creating the information data to be required by the client in future.

More specifically, once a user performs input, updating, modification or the like with respect to data by using the client, data stored in the client storage region of the database server is modified accordingly. Moreover, based on this modification, the database server automatically collects necessary information from the network, etc., in advance.

As described, the database server according to the present invention can allow the client to access information at high speed without imposing a special operation load to a user. Further, the database server according to the present invention can automatically collect information even under such a state that the database server and the client are not connected. Therefore, compared to a case in which the client itself collects information, a client's communication load is greatly reduced.

Additional objects, features, and strengths of the present invention will be made clear by the description below. Further, the advantages of the present invention will be evident from the following explanation in reference to the drawings.

### BRIEF DESCRIPTION OF THE DRAWINGS

Figure 1 is a block diagram schematically showing an arrangement for a database server and a client according to one embodiment of the present invention.
Figure 2 is a flow chart schematically showing operation of the database server and the client.
Figure 3 is an explanatory view illustrating examples of input data with attributes thereof.
Figure 4 is a flow chart specifically illustrating how the information collection condition set portion sets an information collection condition.
Figure 5 is an explanatory view illustrating an example of an information collection table in which a data attribute and a network address, which are stored in a data storage portion, are associated with each other.
Figure 6 is an explanatory view showing an example of URLs which are respectively given detailed specifying conditions.
Figure 7 is a block diagram illustrating an arrangement including the database server and other servers.
Figure 8 is a block diagram schematically showing an arrangement for a database server and a client according to another embodiment of the present invention.
Figure 9 is a flow chart schematically showing operation of the database server and the client shown in Figure 8.

### DESCRIPTION OF THE EMBODIMENTS

### [First Embodiment]

The following will describe one embodiment in accordance with the present invention with reference to Figures.

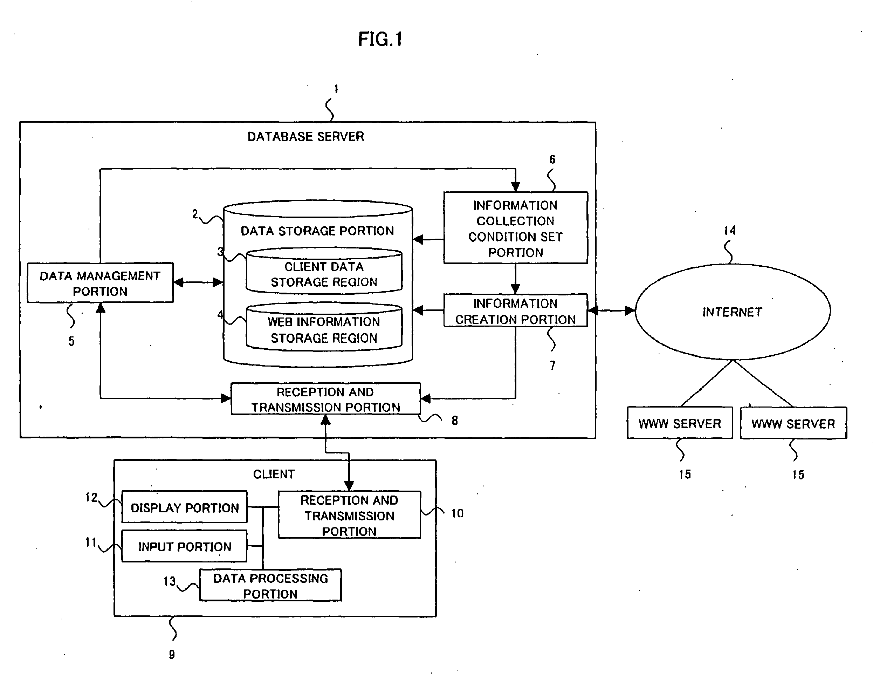

Figure 1 is a block diagram schematically showing an arrangement of a database server (server) 1 according to the present embodiment.

Referring to Figure 1, the database server 1 is connected to a client 9 via a network. The database server 1 is connected to a WWW (World Wide Web) server 15 via the Internet 14.

The database server 1 includes a data storage portion (data storage means) 2 formed by a client data storage region (client data region) 3 for storing data (client data) related to the client 9 and a Web information storage region 4 for storing varieties of Web information.

The database server 1 includes a data management portion (client data management means) 5 for managing information data related to the client 9 by modifying and updating the data stored in the client data storage region 3.

The database server 1 includes an information collection condition set portion (information collection condition set means) 6 for, if a detail of data in the client data storage region 3 is modified, setting a condition for information collection (hereinafter referred to as an "information collection condition") for specifying such information data as to be required by the client 9 in future, based on the modification.

The database server 1 includes: an information creation portion (information data creation means) 7 creating the information data by searching the Internet 14, the WWW server 15, and the like based on the information collection condition; and a reception and transmission portion (reception and transmission means) 8 for transmitting to, and receiving from, the client 9 the information collection condition set by the information collection condition set portion 6, the Web information stored by the Web information storage region 4.

Meanwhile, the client 9 is formed by: a reception and transmission portion 10 for transmitting and receiving data to and from the database server 1; an input portion 11 for receiving data inputs form the user; a display portion 12 for producing a display (presentation) of various information; and a data processing portion 13 for processing various data inside the client 9.

Incidentally, the network connecting the database server 1 to the client 9 is not limited in any particular manner, but may be any given network, such as a cable or wireless telephone line, the Internet, an Intranet, or a Local Area Network.

In the present embodiment, the client 9 is a PDA (Personal Digital Assistant) equipped with radio reception and transmission functions. The client 9 allows the user to input telephone directory data and schedule data through the input portion 11. Personal information, including the telephone directory data and schedule data, is processed by the data processing portion 13 upon every input and stored in the client data storage region 3 in the database server 1 via the reception and transmission portion 10 and the network.

The personal information, individual information on the client 9, and other information stored in the client data storage region 3 in the database server 1 is downloaded via the reception and transmission portion 10 and the network, according to a command input through the input portion 11 of the client 9. From the downloaded data, graphical and text displays are produced on the display portion 12.

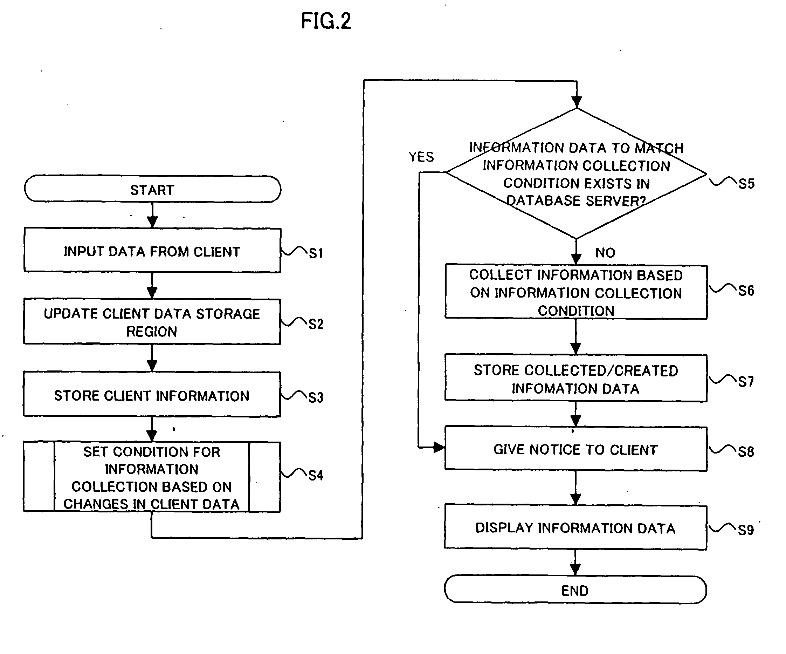

The following will depict an outline of the operation of the database server 1 and the client 9. Figure 2 is a flow chart schematically showing the operation which includes nine steps: S1 through S9.

First, through the input portion 11 of the client 9, the user makes new data inputs and data inputs to update and/or modify the data stored in the client data storage region 3 in the database server 1 (S1).

Subsequently, the data processing portion 13 inside the client 9 analyzes the input data from the input portion 11 to carry out various data processes on the input data. Then, the reception and transmission portion 10 in the client 9 is connected to the reception and transmission portion 8 in the database server 1 over the network, to transmit and receive various data including the input data. The data management portion 5 in the database server 1 updates the details of the data (client data) stored in the client data storage region 3 according to the input data (S2).

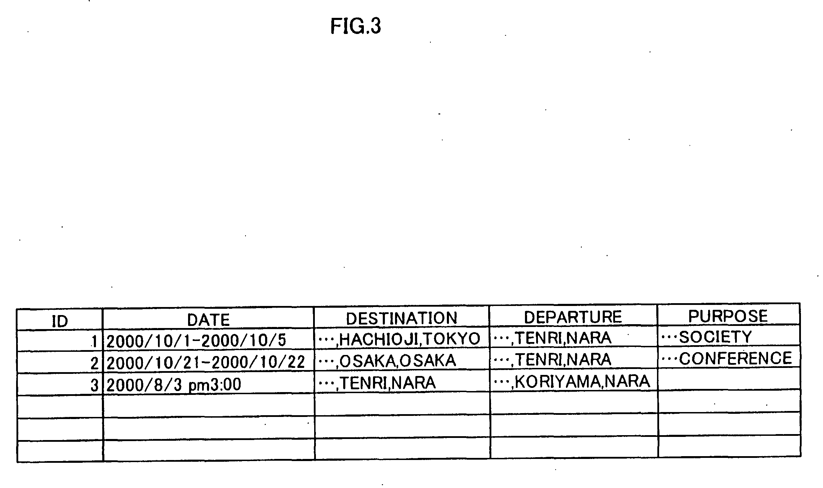

In S2, if the input data is stored in the client data storage region 3 as part of a data structure which is suitable to the attribute, the information collection condition set portion 6 can readily extract input/modification data in a later step. Figure 3 shows, as an example, sets of input data and the attributes thereof. In the figure, the input data is defined as having attributes: "ID", "Date", "Destination", "Departure" and "Purpose."

Alternatively, the input data may be stored in the client data storage region 3 with no data structure, in which case, the information collection condition set portion 6 is adapted so as to extract input/modification data from the stored data with no data structure.

Now, the data management portion 5 in the database server 1 stores individual information on the client 9 in the client data storage region 3 (S3). The individual information on the client 9 is, for instance, data on the times when reception/transmission was made with the database server 1 in the past, the processing capability of the client 9, the place of installation or current location ("Departure") of the client 9, the data transfer direction, and the data transfer rate.

S3 can be omitted if the database server 1 does not utilize the individual information on the client 9.

Next, as the input/modification data and the client information is completely stored, the data management portion 5 gives notice to the information collection condition set portion 6 about modification information as to the client data. According to the notice, the information collection condition set portion 6 extracts the input/modification data from the client data storage region 3. Also, the information collection condition set portion 6 sets an information collection condition for specifying such information data as to be required by the client 9 in future, based on the extracted input/modification data (S4).

In S4, the database server 1 may give notice to the client 9 about the details of setting and the setting itself after finishing setting the information collection condition. The notice gives an opportunity for the user to confirm the particulars of the information collection condition. Also, the database server 1 may be adapted to receive a direct command from the client 9 for condition modification so that the information collection condition set portion 6 can modify the information collection condition based on the condition modification command.

The information creation portion 7 determines whether or not the data storage portion 2 has information data which matches the information collection condition, by searching the data storage portion 2 including the client data storage region 3 and the Web information storage region 4 (S5).

If the information creation portion 7 determines in S5 that the data storage portion 2 has information data which matches the information collection condition, the information creation portion 7 retrieves the information data from the data stored in the data storage portion 2 and creates information data which matches the information collection condition based on the retrieved information. Also, the information creation portion 7 stores the created information data in the data storage portion 2 in association with the client data. The operation then proceeds to S8.

In contrast, if the information creation portion 7 determines in S5 that the data storage portion 2 has no information data which matches the information collection condition, the information creation portion 7 accesses via the Internet 14 the WWW server 15 which matches the information collection condition, to conduct a search based on the information collection condition. The information creation portion 7 creates the information data based on information collected by the search (S6).

As the collection by means of the Internet 14 and subsequent creation of the information data is completed, the information creation portion 7 stores the created information data in the data storage portion 2 in association with the client data (S7).

In S7, if the information data collected is too large to store in the data storage portion 2, only some keywords, such as URLs (Uniform Resource Locators/ network addresses) representing the locations of the information data on the Internet 14, which are part of the information data, may be stored in the data storage portion 2.

Alternatively, S5 to determine the existence of the information data may be omitted altogether. In other words, S6 and S7 may be always carried out regardless of whether the data storage portion 2 has information data which matches the information collection condition. Further, the search for the information data does not have to be limited only to the Internet 14 and the WWW server 15, but may be expanded to include any given network and database.

In a succeeding step, the data management portion 5 or the information creation portion 7 gives notice to the client 9 about the information collection condition and the creation of new information data via the reception and transmission portion 8 (S8).

S4 through S8 are automatically carried out as detailed above by the database server 1 even when the database server 1 is not connected to the client 9. The transmission and reception of various data, including notices, can however be carried out efficiently between the database server 1 and the client 9, if the information collection condition set portion 6 is activated upon access from the client 9. Thus activating the information collection condition set portion 6 upon access from the client 9 is useful in that the information collection condition can be set based on the most up-to-date client information at the time of access.

Finally, the client 9 receives desired data in the created and stored information data via the reception and transmission portion 8, the reception and transmission portion 10 and the network to display the details of the data on the display portion 12 (S9).

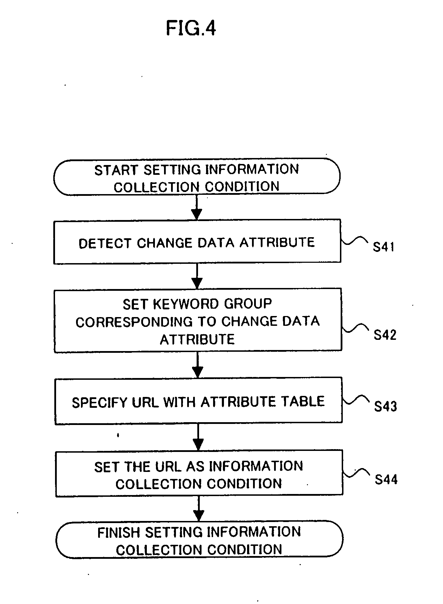

The following will concretely describe S4 in which the information collection condition set portion 6 sets the information collection condition for specifying such information data as to be required by the client 9 in future. Figure 4 is a flow chart depicting concrete procedures to set the information collection condition. As shown in Figure 4, the concrete procedures are made up of 4 steps: S41 through S44.

First, based on modification information as to the client data sent from the data management portion 5, the information collection condition set portion 6 detects an attribute of the input/modification data to be extracted from the client data storage region 3 (S41).

The attribute is, for example, a "schedule" attribute which is affixed to input/modification data in association with a schedular (scheduling) application in the case where the schedular application created the input/modification data to be stored in S2 (see Figure 3).

Next, based on the attribute of the input/modification data detected in S41, the information collection condition set portion 6 extracts suitable client data from the client data storage region 3. Further, the information collection condition set portion 6 sets a keyword group according to the attribute and the details of the input/modification data in reference to a keyword table corresponding to the attribute of the client data (S42).

For example, if the input/modified client data is created by the schedular application and has an attribute "schedule" affixed thereto (see Figure 3), the information collection condition set portion 6 sets a keyword group which is made up of a place-name keyword, such as *Hachioji Tokyo,* a date keyword, such as *2000*/*10*/*1,* having a data structure which is made up of numerals and slashes, and possibly other keywords, as the keyword table in reference to dictionary of place names or the like.

Incidentally, the information collection condition set portion 6 takes into account the information on individual clients 9 stored in S3 when setting the keyword group. Examples of information on individual clients 9 include data on the times when reception/transmission was made with the database server 1 in the past, the processing capability of the client 9, the place of installation or current location of the client 9, the data transfer direction, and the data transfer rate.

For example, if the client 9 has a low processing capability, the information collection condition set portion 6 sets the keyword group so as to include relatively increased amounts of text information which is relatively small in data size and information on locales corresponding to the place of installation or current location of the client 9.

Preferably, the information on individual clients 9 include information on use status of the information data. When this is the case, the information collection condition set portion 6 can set, for example, a keyword group like a one in the past for such a client 9 which frequently uses the information data offered and a keyword group greatly different from the ones in the past for a client 9 which rarely uses the information data offered.

Next, the information collection condition set portion 6 specifies a network address which matches the attribute of the client data, using the keyword group (S43).

The keyword group network address specification by the information collection condition set portion 6 may be done using the information stored in the data storage portion 2 or various search engines on external WWW servers 15.

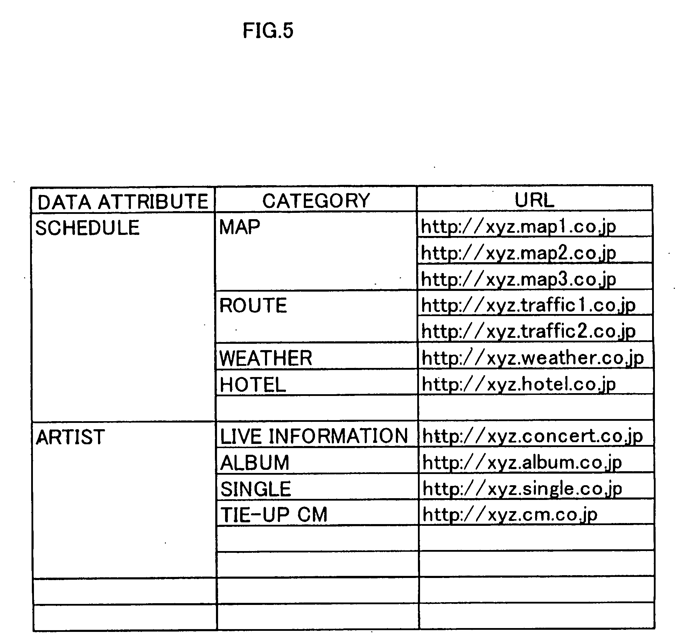

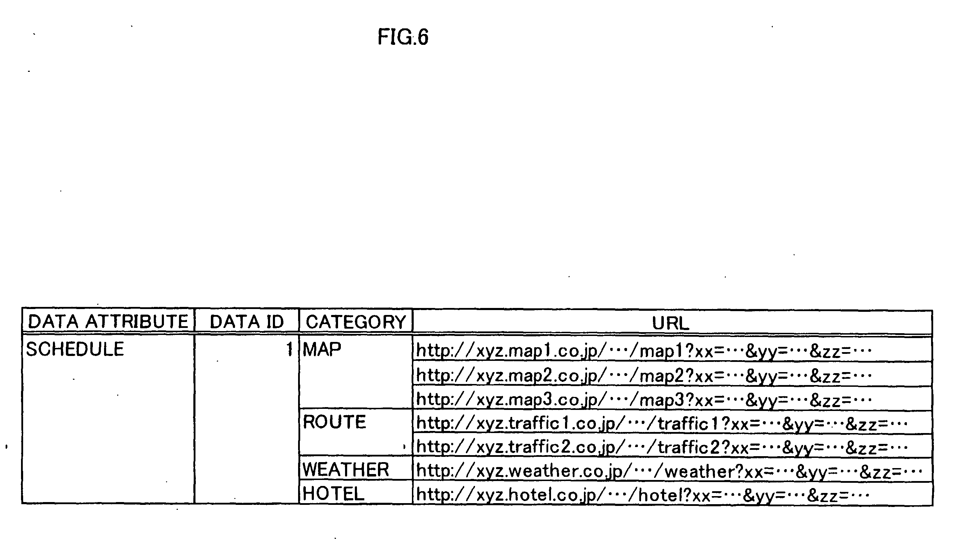

Now, referring to Figures 5 and 6, the following will describe, as an example, those procedures that specify the network address in S43.

Figure 5 is an explanatory drawing showing, as an example, an information collection table stored in the data storage portion 2 in association with the data attribute and the network address (a URL used in the Internet 14). In the present embodiment, the information collection table shown in Figure 5 is used not only to specify a URL that matches the attribute of the client data, but also to add detailed information specifying conditions to the URL by adding the keyword group information. Figure 6 is an explanatory drawing showing, as an example, a URL to which detailed information specifying conditions are added.

Finally, the information collection condition set portion 6 sets the URL to which detailed information specifying conditions are added in S43 as the information collection condition for specifying the information data required by the client 9 in future (S44).

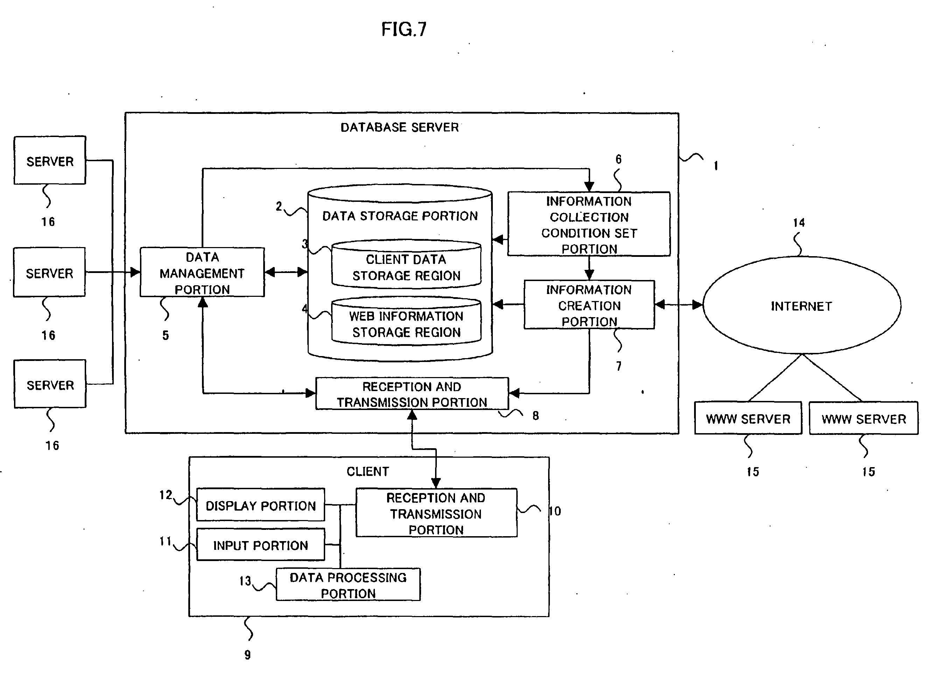

As shown in Figure 7, the data management portion 5 in the database server 1 may modify the client data in response to not only input commands from the client 9, but also commands from another server 16 connected to the database server 1. Further, the reception and transmission portion 8 in the database server 1 may give notice to client 9 about information on the modification of the client data based on commands from the other server 16. As shown in Figure 7, there may be more than one other server 16.

In S5-S6, the information creation portion 7 may include, in the created information data, display format control data (presentation format control data) according to which the display format of the client 9 is controlled. For example, by adding HTML (Hypertext Mark-up Language) control codes to the information data, when the client 9 produces display from the information data on the display portion 12, the URL contained in the information data can appear in a color or the shape of a specified icon can be modifies to stand out from others.

Incidentally, the operation of the database server 1 may be carried out by means of a program, executable by a server, which includes the steps of: detecting a modification to client data managed by the server (S2); setting an information collection condition for specifying such information data as to required by the client in future based on the modification (S4); and creating the information data by means of a search conducted based on the information collection condition (S5-S7). By feeding the program to a computer by means of any given recording medium (a semiconductor memory, such as a RAM or a ROM; a hard disk; a tape medium, such as magnetic tape or cassette tape; an external magnetic disk, such as a floppy disk or a hard disk; an optical disk, such as a CD-ROM; IC card; etc.), the computer can carry out the same operation as the database server 1.

The operation of the database server 1, if described as an information management method, is an information management method which allows a server to manage information corresponding to each client and includes the steps of detecting a data modification in a client data storage region, the client data corresponding to each client; setting an information collection condition for specifying such information data as to be required by the client in future based on the data modification thus detected; and creating the information data by a search performed according to the information collection condition thus set.

### [Second Embodiment]

Another embodiment of the present invention will be described below with reference to drawings.

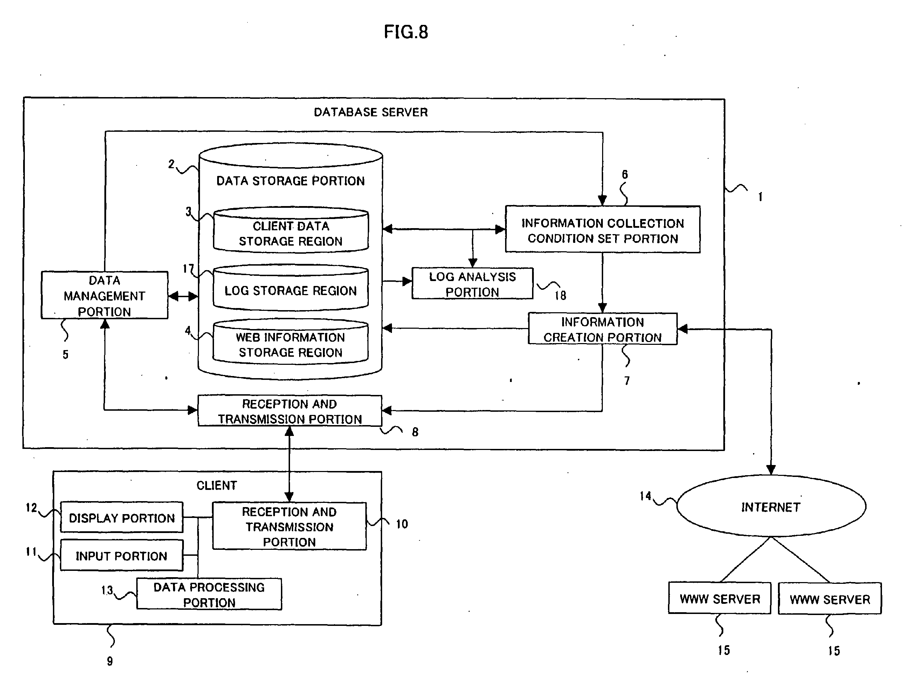

Figure 8 is a block diagram which schematically shows an arrangement of another embodiment of the database server 1. In Figure 8, the same numerals are given to the same members as the members shown in Figure 1, and descriptions thereof are omitted.

As shown in Figure 8, according to the present embodiment, a data storage portion 2 in the database server 1 has a log storage region 17 for recording a log (past information data collection record) of the database server 1, besides the client data storage region 3 and the Web information storage region 4. Further, according to the present embodiment, the database server 1 has a log analysis portion 18 for analyzing the log recorded in the log storage region 17. The log analysis portion 18 is realized by various kinds of computers having calculation functions.

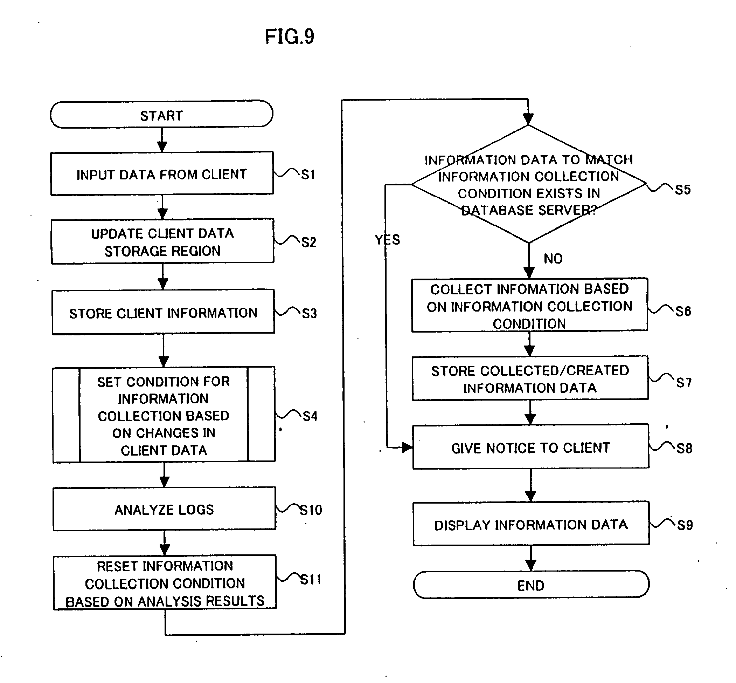

Next, the following is to describe an outline of operation of the database server 1 and the client 9 of the present embodiment. Figure 9 is a flowchart which shows the outline of the operation, and the operation is performed in 11 steps (S1 to S11), as shown in Figure 9. Note that, in the flowchart of Figure 9, since the operation of S1 to S9 is the same as that shown in the flowchart of Figure 2, the same step numbers are given to the operation of Figure 9, and descriptions thereof are omitted.

As described by using Figure 2 in the First Embodiment, the data management portion 5 informs the collection condition set portion 6 that the client data has been modified, and the information collection condition set portion 6 extracts the client data inputted or modified by the client data storage region 3. Further, in accordance with the extracted client data, the information collection condition set portion 6 sets an information collection condition for specifying such information data as to be required by the client 9 in future.

Further to the steps of S1 to S4, the log analysis portion 18 of the database server 1 specifies the WWW server 15, which performed communication with the database server 1 more frequently than a predetermined frequency, by analyzing the log recorded in the log storage region 17 (S10).

Next, the information collection condition set portion 6 modifies and resets (renews) the information collection condition set in S4 so that the information data of the WWW server 15, which has been specified in S10, is retrieved as a priority, or only the information data of the WWW server 15, which has been specified, is retrieved (S11). An example of the information collection condition for retrieving the specific information data of the WWW server 15 includes an information collection condition in which the WWW server 15, other WWW sites linked to the WWW server 15 in the WWW site, and servers which manage the sites are retrieved exclusively.

In this manner, the information collection condition set portion 6 sets the information collection condition in accordance with the log, which is the past information data collection record. Thus, the database server 1 can retrieve only the WWW server 15 which has been used frequently, and can set the information collection condition so as not to retrieve the WWW server 15 in a case where the WWW server 15 has already closed.

Further to S11, in the First Embodiment, the step goes back to S5 to S9 in which the descriptions are given by using Figure 2.

Note that, according to the foregoing descriptions, in a process of S11, the information collection condition is set/modified by using log information of communication, but the following arrangement may be made. The information collection condition is set/modified by using past Web information stored in the Web information storage region 4, or by using various information stored in the client data region 3, instead of using the log information. Further, the following arrangement may be made. After the information creation portion 7 collects required information via a network, the information collection condition set portion 6 resets (renews) the information collection condition in accordance with the processes of the steps of S10 to S11.

Further, it is preferable that the database server 1 of the present invention informs the client 9 that the information creation portion 7 creates information data.

According to the present arrangement, the client 9 is informed that the information data is created, so that it becomes easier that the user, who operates the client 9, grasps and manages the increase of the amount of information in the database server 1.

Further, it is preferable that the database server 1 informs the client of the information collection condition.

According to the present arrangement, the client is informed of the information collection condition. Thus, the user, who operates the client 9, can confirm the information collection condition of the database server 1 easily, and can judge whether information collection performed by the database server 1 is appropriate or not.

Further, it is preferable that the information collection condition set portion (information collection condition set means) 6 of the database server 1 of the present invention is actuated upon access to/from the client 9.

According to the present arrangement, the database server 1 can efficiently transmit and receive various kinds of data such as notice transmitted and received between the database server 1 and the client 9. Further, the database server 1 can perform an appropriate information collection in accordance with updated information concerning the client 9 obtained upon access.

Further, it is preferable that the information collection condition set portion (information collection condition set means) 6 of the database server 1 of the present invention sets the information collection condition in accordance with information concerning separate client (separate client information) 9.

According to the present arrangement, the information collection condition is set in accordance with not only changes (modifications) in the client data stored in the client data storage region 3 (see Figure 1, Figure 7, and Figure 8), but also the separate client information. Examples of information concerning the separate client 9 (separate client information) include a past communication time when the client 9 performed communication with the database server 1, processing performance of the client 9, the place of installation or current location of the client 9, a data transfer direction, a data transfer rate, and the like.

Thus, the database server 1 of the present invention can perform the information collection according to a status of each client 9, for example, according to position information of the user. Further, the database server 1 can make the information collection more efficient and more appropriate.

Further, it is preferable that information on use status of the information data created by the information creation portion 7 in the past, is included in the separate client information.

According to the present arrangement, the information collection condition is set by reflecting not only modifications in the client data stored in the client data storage region 3 of the database server 1 (see Figure 1, Figure 7, and Figure 8) but also the status of use of the information data by the each client 9, which were created by the information creation portion 7 in the past.

Thus, the database server 1 of the present invention can perform the information collection according to the use status of each client 9. For example, it is possible to modify a detail of collection of information data so that more appropriate information can be provided to the client 9 which hardly uses the provided information data, while the database server 1 continues to provide information data, similar to information data provided in the past, to the client 9 which uses the provided information data frequently.

Further, it is preferable that the information collection condition set portion (information collection condition set means) 6 of the database server 1 according to the present invention modifies the information collection condition based on an instruction of the client 9.

According to the present arrangement, since the information collection condition is modified by the instruction given by the client 9, the user of the client 9 can directly give an instruction to modify the information collection condition and to perform the information collection based on the modified information collection condition, in a case where the user is not satisfied with the details of the information collection condition and a result of the information collection.

Moreover, it is preferable that the information collection condition set portion 6 of the database server 1 of the present invention sets the information collection condition, referring to a keyword table which corresponds to an attribute of the client data, which has been modified.

With the above arrangement, the information collection condition is set referring to the keyword table (database) which corresponds to the attribute of the modified client data. Here, the keyword table is prepared in advance. In the case where, for example, the client data that has been modified is a directory, with reference to the keyword table indicating a postal code reference table, a telephone directory, map information and the like is set the information collection condition that corresponds with a postal code, a telephone number or the like in accordance with the directory.

In this manner, the information required by each client 9 is collected accurately, while minimizing the amount of the calculation and the amount of the search performed by the database server 1. Therefore, the information collection can be carried out more effectively and appropriately.

Furthermore, it is preferable that the information collection condition set portion (information collection condition set means) 6 sets the information collection condition according to a network address which corresponds to an attribute of the client data. An Example of the network address thus corresponding to the attribute of the client data is, in the case where the client data is a directory, a URL of a Web site in which a postal code reference table, a telephone directory, map information and the like are recited.

With the above arrangement, the information creation portion (information data creation means) 7 accesses the network address, which corresponds to the attribute of the client data, so that the information collection is carried out appropriately corresponding to the attribute of the client data.

This makes it possible to appropriately collect the information required by each client 9, while minimizing the amount of the calculation and the amount of the search performed by the database server 1. Therefore, the information collection is carried out more effectively and appropriately.

Moreover, it is preferable that the information collection condition set portion (information collection condition set means) 6 sets the information collection condition by using a record of information data collection performed in the past.

The information collecting condition, which is set according to the above arrangement, reflects the information data collection record in the past in the database server 1 of the present invention, in addition to the modification made in the client data. For example, the information collection condition set portion 6 limits, to such a database (databases) which has been frequently used for a past information data collection, destinations to search for the information. In addition, with this arrangement, in a case where it had been found during the past information data collection that a Web site which was a database had been closed down, the information collection condition set portion 6 can set the information collection condition so as to exclude the closed database from the destinations to search.

This makes it possible to appropriately collect the information required by each client 9, while further reducing the amount of the calculation and the amount of the search performed by the database server 1, thereby making it possible to carry out the information collection in a further more efficient and appropriate fashion. Further, it is possible to reduce a load of the database server 1 for communication by limiting destinations to access by strictly selecting which database should be accessed.

Moreover, it is preferable that the information creation portion (information data creation means) 7 searches the data storage portion (data storage means) 2.

With the above arrangement, where the information creation portion 7 searches the data storage portion (data storage means) 2 inside the database server 1, in order to search the information in accordance with the information collection condition, the information data in the database server 1 is also searched by the information creation portion 7.

This allows the information data inside the database server 1 to be used effectively for creating the information. Therefore, searching the database server 1 can be done without much need of access to/from an external destination, thereby making it possible to carry out the information collection in a prompt and effective manner while reducing the communication load.

Furthermore, it is preferable that the information creation portion (information data creation means) 7 stores, in the data storage portion (data storage means) 2, the created information data by associating it with the client data.

With the above arrangement, the collected information data is stored in association with the client data in the data storage means. Therefore, when reading the client data, the user operating the client 9 can use the collected information data associated to data currently being read, in a convenient and speedy manner. For example, when client data indicating the directory and collected information data indicating a map of a specific address are stored in the data storage portion (data storage means) 2 in such a manner that the client data and the collected information data are associated and linked with each other, map information, which is related to the directory, can be checked with ease while the directory is currently being read.

Moreover, it is preferable that the information creation portion (information data creation means) 7 causes the created information data to include presentation format control data which controls a format in which the client data is presented. Examples of the presentation format control data include a tag code of HTML to modify a display color of URL, or a shape of an icon, which are part of the information data.

With the above arrangement, since the information data includes the presentation format control data, the format of the client data, which is an image or sound of the information data, is controlled in accordance with the presentation format control data.

In this manner, the client can present the information effectively, thereby allowing the user to use the information more effectively.

Moreover, it is preferable that the data management portion (client data management means) 5 modifies the client data based on an instruction given from a different server capable of accessing the network.

With the above arrangement, the client data is modified based on the instruction given from the different server capable of accessing the network, and the information collection condition is set in accordance with the modified client data. For example, in the case where a detail of the information of a different server is modified, the client data and the setting of the information collection condition are also modified to comply with the modification.

In this manner, even if an information data is mutually exchanged between plural servers, the modification of the client data and the information collection/creation according to the modification can be carried out appropriately, according to instructions given respectively by the servers.

Further, a server-executable information management program and a computer-readable recording medium having the information management program recorded therein according to the present invention include the steps of (a) detecting modification of such client data corresponding to each client that is under management of by the server, (b) setting an information collection condition for specifying such information data as to be required by the client in future based on the modification, and (c) creating the information data by a search performed according to the information collection condition.

A computer with the program can operate identically with the database server 1 of the present invention.

Furthermore, the present invention can be expressed as an information management method which allows a server to manage information corresponding to each client, the method including the steps of (a) detecting data modification in a client data storage region, the client data corresponding to each client, (b) setting an information collection condition for specifying such information data as to be required by the client in future based on the data modification thus detected, and (c) creating the information data by a search performed according to the information collection condition thus set.

## Claims

1. A database server (1) which includes reception and transmission means (8) for sending/receiving data to/from a client (9) via a network, and data storage means (2) having a client data storage region (3) which stores client data corresponding to the client (9), the data base server (1) comprising:
information collection condition set means (6) for detecting a data modification effected by the client in the client data storage region and setting an information collection condition based on the data modified by the detected data modification for performing a search therewith for information data to be required by the client in future, wherein the information collection condition set means (6) sets the information collection condition by using additional client information which includes information on use status of the information data created by information data creation means (7) in the past, and wherein the information collection condition is a keyword group, and
the information data creation means (7) creating information data from the search performed in accordance with the information collection condition.

2. The database server (1) as set forth in claim 1, wherein:
the information collection condition set means (6) sets the information collection condition based on schedule data contained in the client data.

3. The database server (1)as set forth in claim 1, wherein:
the information collection condition set means (6) sets the information collection condition based on location information of the client contained in the client data.

4. The database server (1) as set forth in claim 3, wherein:
the location information is address information.

5. The database server (1)as set forth in claim 3, wherein:
the location information is current location information.

6. The database server (1) as set forth in claim 3, wherein:
the location information is destination information.

7. The database server (1) as set forth in any one of claims 1 to 6. further comprising client data management means (5) for managing the client data in the data storage means (2).

8. The database server (1)as set forth in any one of claims 1 to 7, wherein the client (9) is informed of the creation of the information data.

9. The database server (1) as set forth in either one of claims 1 to 8, wherein the client (9) is informed of the information collection condition.

10. The database server (1)as set forth in either one of claims 1 to 9, wherein the information collection condition set means (6) is actuated upon access to/from the client (9).

11. The database server (1) as set forth in either one of claims 1 to 10, wherein the information collection condition set means (6) modifies the information collection condition based on client's (9) instruction.

12. The database server (1) as set forth in either one of claims 1 to 11, wherein the information collection condition set means (6) sets the information collection condition with reference to a keyword table which corresponds to an attribute of the client data.

13. The database server (1) as set forth in either one of claims 1 to 12, wherein the information collection condition set means (6) sets the information collection condition based on a network address which corresponds to an attribute of the modified client data.

14. The database server (1) as set forth in either one of claims 1 to 13, wherein the information collection condition set means (6) sets the information collection condition by using a record of information data collection performed in the past.

15. The database server (1) as set forth in either one of claims 1 to 14, wherein the information data creation means (7) searches the data storage means (2).

16. The database server (1)as set forth in either one of claims 1 to 15, wherein the information data creation means (7) stores in the data storage means (2) the created information data in association with the client data.

17. The database server (1)as set forth in either one of claims 1 to 16, wherein the information data creation means (7) causes the created information data to include presentation format control data which controls a format in which the created data is presented by the client (9).

18. The database server (1)as set forth in either one of claims 7 to 17, wherein the client data management means (5) modifies the client data based on an instruction given from a different server capable of accessing the network.

19. A recording medium which stores a computer program, wherein the computer program performs the following steps when being executed on a database server (1) which includes reception and transmission means (8) for sending/receiving data to/from a client (9) via a network, and data storage means (2) having a client data storage region (3) which stores client data corresponding to the client (9):
detecting a modification effected by the client in the client data;
setting an information collection condition based on the data modified by the detected data modification for performing a search therewith for information data to be required by the client (9) in future, wherein the setting of said information collection condition is done using additional client information which includes information on use status of the information data created by information data creation means (7) in the past, and wherein the information collection condition is a keyword group, and
creating information data from the search performed in accordance with the information collection condition.

20. An information management method which allows a database server (1) which includes reception and transmission means (8) for sending/receiving data to/from a client (9) via a network, and data storage means (2) having a client data storage region (3) which stores client data corresponding to the client (9), to manage information corresponding to each client (9), the method comprising the steps of:
detecting a data modification effected by the client in the client data storage region (3), the client data corresponding to each client (9);
setting an information collection condition based on the data modified by the detected data modification for performing a search therewith for information data to be required by the client (9) in future, wherein the setting of said information collection condition is done using additional client information which includes information on use status of the information data created by information data creation means (7) in the past, and wherein the information collection condition is a keyword group, and
creating information data from the search performed in accordance with the information collection condition thus set.

21. The database server (1) as set forth in claim 1, wherein the information collection condition set by the information collection condition set means (6) is informed to a user of the client.

## Patentansprüche

1. Datenbankserver (1), der eine Empfangs- und Sendeeinrichtung (8) enthält zum Empfangen/Senden von Daten an/von einem Client (9) über ein Netzwerk sowie eine Datenspeichereinrichtung (2) mit einem Clientdatenspeichergebiet (3), das dem Client (9) entsprechende Clientdaten speichert, wobei der Datenbankserver (1) umfasst:
eine Informationserfassungsbedingungseinstelleinrichtung (6) zum Detektieren einer von dem Client in dem Clientdatenspeichergebiet bewirkten Datenänderung und zum Festlegen einer Informationserfassungsbedingung basierend auf den Daten, die über die detektierte Datenänderung geändert wurden, um damit eine Suche nach Informationsdaten durchzuführen, die von dem Client zukünftig benötigt werden, wobei die Informationserfassungsbedingungseinstelleinrichtung (6) die Informationserfassungsbedingung durch Verwenden zusätzlicher Clientinformation, die Information über den Benutzungsstatus der von einer Informationsdatenerzeugungseinrichtung (7) in der Vergangenheit erzeugten Informationsdaten beinhaltet, festlegt und wobei die Informationserfassungsbedingung eine Schlüsselwortgruppe darstellt, und
die Informationsdatenerzeugungseinrichtung (7), die Informationsdaten basierend auf der Suche erzeugt, welche gemäß der Informationserfassungsbedingung durchgeführt wurde.

2. Datenbankserver (1) nach Anspruch 1, wobei:
die Informationserfassungsbedingungseinstelleinrichtung (6) die Informationserfassungsbedingung basierend auf in den Clientdaten enthaltenen Zeitplandaten festlegt.

3. Datenbankserver (1) nach Anspruch 1, wobei:
die Informationserfassungsbedingungseinstelleinrichtung (6) die Informationserfassungsbedingung basierend auf in den Clientdaten enthaltener Standortinformation festlegt.

4. Datenbankserver (1) nach Anspruch 3, wobei:
die Standortinformation einer Adressinformation entspricht.

5. Datenbankserver (1) nach Anspruch 3, wobei:
die Standortinformation gegenwärtige Standortinformation ist.

6. Datenbankserver (1) nach Anspruch 3. wobei:
die Standortinformation Bestimmungsortinformation ist.

7. Datenbankserver (1) nach einem der Ansprüche 1 bis 6, zusätzlich umfassend eine Clientdatenmanagementeinrichtung (5) zur Handhabung der Clientdaten in der Datenspeichereinrichtung (2).

8. Datenbankserver (1) nach einem der Ansprüche 1 bis 7, wobei der Client (9) von der Erzeugung der Informationsdaten in Kenntnis gesetzt wird.

9. Datenbankserver (1) nach einem der Ansprüche 1 bis 8, wobei der Client (9) von der Informationserfassungsbedingung in Kenntnis gesetzt wird.

10. Datenbankserver (1) nach einem der Ansprüche 1 bis 9, wobei die Informationserfassungsbedingungseinstelleinrichtung (6) über einen Zugriff auf/von dem Client (9) betrieben wird.

11. Datenbankserver (1) nach einem der Ansprüche 1 bis 10, wobei die Informationserfassungsbedingungseinstelleinrichtung (6) die Informationserfassungsbedingung basierend auf einer Anweisung eines Benutzers (9) ändert.

12. Datenbankserver (1) nach einem der Ansprüche 1 bis 10, wobei die Informationserfassungsbedingungseinstelleinrichtung (6) die Informationserfassungsbedingung mit Bezug auf eine Schlüsselworttabelle, die einem Kennzeichen der Clientdaten entspricht, festlegt.

13. Datenbankserver (1) nach einem der Ansprüche 1 bis 12, wobei die Informationserfassungsbedingungseinstelleinrichtung (6) die Informationserfassungsbedingung basierend auf einer Netzwerkadresse, die einem Kennzeichen der geänderten Clientdaten entspricht, festlegt.

14. Datenbankserver (1) nach einem der Ansprüche 1 bis 13, wobei die Informationserfassungsbedingungseinstelleinrichtung (6) die Informationserfassungsbedingung durch Verwenden einer Aufzeichnung einer in der Vergangenheit durchgeführten Informationsdatenerfassung festlegt.

15. Datenbankserver (1) nach einem der Ansprüche 1 bis 14, wobei die Informationsdatenerzeugungseinrichtung (7) die Datenspeichereinrichtung (2) durchsucht.

16. Datenbankserver (1) nach einem der Ansprüche 1 bis 15, wobei die Informationsdatenerzeugungseinrichtung (7) die erzeugten Informationsdaten in Verbindung mit den Clientdaten in der Datenspeichereinrichtung (7) speichert.

17. Datenbankserver (1) nach einem der Ansprüche 1 bis 16, wobei die Informationsdatenerzeugungseinrichtung (7) veranlasst, dass die erzeugten Informationsdaten Präsentationsformatregeldaten enthält, die ein Format regeln, in dem die erzeugten Daten vom Client (9) vorgelegt werden.

18. Datenbankserver (1) nach einem der Ansprüche 7 bis 17, wobei die Clientdatenmanagementeinrichtung (5) die Clientdaten basierend auf einer Anweisung ändert, die von einem anderen Server stammt, dem ein Zugang zum Netzwerk möglich ist.

19. Aufzeichnungsmedium, das ein Computerprogramm speichert, wobei das Computerprogramm die folgenden Schritte durchführt bei Abarbeitung desselben auf einem Datenbankserver (1), der eine Empfangs- und Sendeeinrichtung (8) zum Senden/Empfangen von Daten zu/von einem Client (9) über ein Netzwerk enthält, als auch eine Datenspeichereinrichtung (2) mit einem Clientdatenspeichergebiet (3), das dem Client (9) entsprechende Clientdaten speichert:
Detektieren einer Änderung, die vom Client in den Clientdaten hervorgerufen wird;
Festlegen einer Informationserfassungsbedingung basierend auf den Daten, die über die detektierte Datenänderung geändert wurden, um damit eine Suche nach Informationsdaten durchzuführen, die zukünftig vom Client (9) benötigt werden, wobei die Festlegung der Informationserfassungsbedingung unter Verwendung zusätzlicher Clientinformation, die Information über den Benutzungsstatus der von einer Informationsdatenerzeugungseinrichtung (7) in der Vergangenheit erzeugten Informationsdaten beinhaltet, erfolgt und wobei die Informationserfassungsbedingung eine Schlüsselwortgruppe darstellt, und
Erzeugen von Informationsdaten basierend auf der Suche, welche entsprechend der Informationserfassungsbedingung durchgeführt wurde.

20. Informationsmanagementverfahren, das einem Datenbankserver (1), der eine Empfangs- und Sendeeinrichtung (8) zum Senden/Empfangen von Daten zu/von einem Client (9) über ein Netzwerk sowie eine Datenspeichereinrichtung (2) mit einem Clientdatenspeichergebiet (3), das dem Client (9) entsprechende Daten speichert, enthält, die Handhabung von dem jeweiligen Client (9) entsprechender Information ermöglicht, wobei das Verfahren die Schritte aufweist:
Detektieren einer Datenänderung, die vom Client in dem Clientdatenspeichergebiet (3) hervorgerufen wird, wobei die Clientdaten dem jeweiligen Client (9) entsprechen;
Festlegen einer Informationserfassungsbedingung basierend auf den Daten, die über die detektierte Datenänderung geändert wurden, um damit eine Suche nach Informationsdaten durchzuführen, die zukünftig vom Client (9) benötigt werden, wobei die Festlegung der Informationserfassungsbedingung unter Verwendung zusätzlicher Clientinformation, die Information über den Benutzungsstatus der von einer Informationsdatenerzeugungseinrichtung (7) in der Vergangenheit erzeugten Informationsdaten beinhaltet, erfolgt und wobei die Informationserfassungsbedingung eine Schlüsselwortgruppe darstellt, und
Erzeugen von Informationsdaten basierend auf der Suche, welche entsprechend der Informationserfassungsbedingung durchgeführt wurde.

21. Datenbankserver (1) nach Anspruch 1, wobei die Informationserfassungsbedingung, die von der Informationserfassungsbedingungseinstelleinrichtung (6) festgelegt wird, einem Nutzer des Clients mitgeteilt wird.

## Revendications

1. Un serveur de base de données (1) qui inclut un moyen de réception et de transmission (8) pour envoyer/recevoir des données à/à partir d'un client (9) via un réseau, et un moyen de stockage de données (2) comportant une région de stockage de données client (3) qui stocke des données client correspondant au client (9), le serveur de base de données (1) comprenant :
un moyen de définition de condition de collection d'informations (6) pour détecter une modification de données effectuée par le client dans la région de stockage de données client et définir une condition de collection d'informations en fonction des données modifiées par la modification de données détectée pour réaliser selon celle-ci une recherche de données d'informations qui seront requises par le client dans le futur, dans lequel le moyen de définition de condition de collection d'informations (6) définit la condition de collection d'informations en utilisant des informations client supplémentaires incluant des informations sur le statut d'utilisation des données d'informations créées par un moyen de création de données d'informations (7) dans le passé, et dans lequel la condition de collection d'informations est un groupe de mots clés, et
le moyen de création de données d'informations (7) créant des données d'informations à partir de la recherche réalisée selon la condition de collection d'informations.

2. Le serveur de base de données (1) selon la revendication 1, dans lequel :
le moyen de définition de condition de collection d'informations (6) définit la condition de collection d'informations en fonction de données de planification contenues dans les données client.

3. Le serveur de base de données (1) selon la revendication 1, dans lequel:
le moyen de définition de condition de collection d'informations (6) définit la condition de collection d'informations en fonction d'informations d'emplacement du client contenues dans les données client.

4. Le serveur de base de données (1) selon la revendication 3, dans lequel :
les informations d'emplacement sont des informations d'adresse.

5. Le serveur de base de données (1) selon la revendication 3, dans lequel :
les informations d'emplacement sont des informations d'emplacement courantes.

6. Le serveur de base de données (1) selon la revendication 3, dans lequel :
les informations d'emplacement sont des informations de destination.

7. Le serveur de base de données (1) selon l'une quelconque des revendications 1 à 6, comprenant en outre un moyen de gestion de données client (5) pour gérer les données client dans le moyen de stockage de données (2).

8. Le serveur de base de données (1) selon l'une quelconque des revendications 1 à 7, dans lequel le client (9) est informé de la création des données d'informations.

9. Le serveur de base de données (1) selon l'une quelconque des revendications 1 à 8, dans lequel le client (9) est informé de la condition de collection d'informations.

10. Le serveur de base de données (1) selon l'une quelconque des revendications 1 à 9, dans lequel le moyen de définition de condition de collection d'informations (6) est activé en fonction de l'accès au/à partir du client (9).

11. Le serveur de base de données (1) selon l'une quelconque des revendications 1 à 10, dans lequel le moyen de définition de collection d'informations (6) modifie la condition de collection d'informations en fonction d'une instruction du client (9).

12. Le serveur de base de données (1) selon l'une quelconque des revendications 1 à 11, dans lequel le moyen de définition de condition de collection d'informations (6) définit la condition de collection d'informations en référence à une table de mots clés correspondant à un attribut des données client.

13. Le serveur de base de données (1) selon l'une quelconque des revendications 1 à 12, dans lequel le moyen de définition de condition de collection d'informations (6) définit la condition de collection d'informations en fonction d'une adresse réseau correspondant à un attribut des données client modifiées.

14. Le serveur de base de données (1) selon l'une quelconque des revendications 1 à 13, dans lequel le moyen de définition de condition de collection d'informations (6) définit la condition de collection d'informations en utilisant un enregistrement de la collection de données d'informations réalisée dans le passé.

15. Le serveur de base de données (1) selon l'une quelconque des revendications 1 à 14, dans lequel le moyen de création de données d'informations (7) recherche le moyen de stockage de données (2).

16. Le serveur de base de données (1) selon l'une quelconque des revendications 1 à 15, dans lequel le moyen de création de données d'informations (7) stocke dans le moyen de stockage de données (2) les données d'informations créées en association avec les données client.

17. Le serveur de base de données (1) selon l'une quelconque des revendications 1 à 16, dans lequel le moyen de création de données d'informations (7) amène les données d'informations créées à inclure des données de commande de format de présentation qui commandent un format dans lequel les données créées sont présentées par le client (9).

18. Le serveur de base de données (1) selon l'une quelconque des revendications 7 à 17, dans lequel le moyen de gestion de données client (5) modifie les données client en fonction d'une instruction donnée à partir d'un serveur différent capable d'accéder au réseau.

19. Un support d'enregistrement stockant un programme informatique, dans lequel le programme informatique effectue les étapes suivantes lorsqu'il est exécuté sur un serveur de base de données (1) incluant un moyen de réception et de transmission (8) pour envoyer/recevoir des données à/à partir d'un client (9) via un réseau, et un moyen de stockage de données (8) comportant une région de stockage de données client (3) qui stocke des données client correspondant au client (9) :
détection d'une modification effectuée par le client dans les données client ;
définition d'une condition de collection d'informations en fonction des données modifiées par la modification de données détectée pour réaliser selon celle-ci une recherche de données d'informations qui seront requises par le client (9) dans le futur, dans lequel la définition de ladite condition de collection d'informations est effectuée à l'aide d'informations client supplémentaires incluant des informations sur le statut d'utilisation des données d'informations créées par le moyen de création de données d'informations (7) dans le passé, et dans lequel la condition de collection d'informations est un groupe de mots clés, et
création de données d'informations à partir de la recherche réalisée selon la condition de collection d'informations.

20. Un procédé de gestion d'informations qui permet à un serveur de base de données (1) incluant un moyen de réception et de transmission (8) pour envoyer/recevoir des données à/à partir d'un client (9) via un réseau, et un moyen de stockage de données (2) comportant une région de stockage de données client (3) qui stocke des données client correspondant au client (9), de gérer des informations correspondant à chaque client (9), le procédé comprenant les étapes de :
détection d'une modification de données effectuée par le client dans la région de stockage de données client (3), les données client correspondant à chaque client (9) ;
définition d'une condition de collection d'informations en fonction des données modifiées par la modification de données détectée pour réaliser selon celle-ci une recherche de données d'informations qui seront requises par le client (9) dans le futur, dans lequel la définition de ladite condition de collection d'informations est effectuée à l'aide d'informations client supplémentaires incluant des informations sur le statut d'utilisation des données d'informations créées par le moyen de création de données d'informations (7) dans le passé, et dans lequel la condition de collection d'informations est un groupe de mots clés, et
création de données d'informations à partir de la recherche réalisée selon la condition de collection d'informations ainsi définie.

21. Le serveur de base de données (1) selon la revendication 1, dans lequel la condition de collection d'informations définie par le moyen de définition de condition de collection d'informations (6) est spécifiée à un utilisateur du client.
